# EUROPÄISCHE PATENTANMELDUNG

(11) **EP 3 425 460 A1**
(43) Veröffentlichungstag der Anmeldung: **09.01.2019**
(21) Anmeldenummer: 17179597.4
(22) Anmeldetag: 04.07.2017
(51) Int. Cl.: G05B 19/406, B23Q 17/00

(54) **VORRICHTUNG UND VERFAHREN ZUR BESTIMMUNG DES ZUSTANDS EINER SPINDEL EINER WERKZEUGMASCHINE**

(71) Anmelder: Siemens Aktiengesellschaft, 80333 München (DE)
(72) Erfinder: BUGGENTHIN, Felix, 81373 München (DE); BÜTTNER, Florian, 81541 München (DE); SIEGEL, Philipp, 08064 Zwickau (DE); VOM EYSER, Werner, 85560 Ebersberg (DE); HELBIG, Michael, 96106 Ebern (DE); BUTZ, Felix, 97421 Schweinfurt (DE)

(57) **Zusammenfassung**

Die Erfindung betrifft eine Vorrichtung (2) und ein Verfahren zur Bestimmung des Zustands einer Spindel (1) einer Werkzeugmaschine (5). Die Vorrichtung (2) umfasst ein Erfassungsmittel, welches einem Erfassen von Sensordaten der Spindel (1) dient, eine Verarbeitungseinheit, welche derart ausgebildet ist, dass sie die erfassten Sensordaten mittels künstlicher Intelligenz analysiert und hieraus einen Spindelzustand definiert, und ein Ausgabemittel zum Ausgeben des bestimmten Spindelzustands.

## Beschreibung

Die Erfindung betrifft eine Vorrichtung zum Bestimmen eines Spindelzustands einer Spindel einer Werkzeugmaschine sowie ein derartiges Verfahren.

Während des Betriebs einer Spindel einer Werkzeugmaschine - auch Werkzeugspindel genannt - können unerwartete Fehler aufgrund verschiedener Ursachen auftreten. Beispielsweise ist es möglich, dass die Spindel, wenn sie über längere Zeit in einem erhöhten Belastungslevel läuft, frühzeitig und somit vor dem Ende ihrer eigentlichen Lebensdauer ausfällt. Heutige Systeme verfügen über keine Schnittstelle, die eine Anzeige von Daten, die einen derzeitigen Spindelzustand beschreiben, ermöglicht. Eine aktuelle Belastung der Spindel bzw. ein erhöhtes Fehlerrisiko können daher nicht mittels einer objektiven Messung bestimmt werden.

Gegenwärtig wird der Spindelzustand auf Basis von Erfahrungen eines Betreibers der Werkzeugmaschine abgeschätzt.

Der Erfindung liegt die Aufgabe zugrunde, eine derartige Werkzeugmaschine zu verbessern.

Die Lösung der Aufgabe gelingt durch Anspruch 1; d. h. durch eine Vorrichtung, zum Bestimmen eines Spindelzustands einer Spindel einer Werkzeugmaschine, mit einem Erfassungsmittel, welches einem Erfassen von Sensordaten der Spindel dient, einer Verarbeitungseinheit, welche derart ausgebildet ist, dass sie die erfassten Sensordaten mittels künstlicher Intelligenz analysiert und hieraus einen Spindelzustand bestimmt, und einem Ausgabemittel zum Ausgeben des bestimmten Spindelzustands.

Weitere vorteilhafte Ausführungsformen der Erfindung ergeben sich aus den Unteransprüchen 2 bis 11.

Zudem gelingt die Lösung der Aufgabe durch Anspruch 12; d. h. durch ein Verfahren zum Bestimmen eines Spindelzustands mit einer Vorrichtung nach einem der Ansprüche 1 bis 9 mit folgenden Schritten:
- Erfassen der Sensordaten der Spindel von dem Erfassungsmittel,
- Analysieren der erfassten Sensordaten von der Verarbeitungseinheit mittels künstlicher Intelligenz,
- Bestimmen eines Spindelzustands auf Basis der Analyse der erfassten Sensordaten,
- Ausgeben des bestimmten Spindelzustands von dem Ausgabemittel.

Weitere vorteilhafte Ausführungsformen der Erfindung sind in den abhängigen Ansprüchen 13 bis 15 zu finden.

Vorzugsweise charakterisiert die erfindungsgemäße Vorrichtung zum Bestimmen eines Spindelzustands einer Spindel einer Werkzeugmaschine eine Belastung der Spindel. Vorteilhaft erfasst hierfür das Erfassungsmittel während eines Betriebs der Werkzeugmaschine Sensordaten der Spindel wie beispielsweise die Temperatur der Spindel, das Drehmoment der Spindel, die Kraft der Spindel und/oder die Rotationsgeschwindigkeit der Spindel. Insbesondere werden alle vorgenannten Sensordaten durch die Vorrichtung erfasst. Mittels der vorgenannten Sensordaten kann durch die Vorrichtung ein Spindelzustand ermittelt werden.

Die Verarbeitungseinheit analysiert die erfassten Sensordaten mittels künstlicher Intelligenz und bestimmt hieraus einen Spindelzustand. Vorteilhaft kategorisiert die Verarbeitungseinheit die Belastung der Spindel, vorzugsweise in mindestens vier Kategorien. Hierfür eignet sich besonders gut eine Einteilung in eine der vier folgenden Kategorien: Kategorie "permanent erlaubt", Kategorie "mittelfristig erlaubt", Kategorie "kurzfristig erlaubt" und Kategorie "nicht erlaubt". In einer alternativen Ausführungsform zu den vier Kategorien kann auch eine Punktzahl, insbesondere eine kontinuierliche Punktzahl, zur Klassifizierung des Spindelzustands bereitgestellt werden. Wird beispielsweise die Punktzahl zwischen null und eins gewählt, so kann die Belastung der Spindel von "permanent erlaubt" - mit null gekennzeichnet- bis hin zu "nicht erlaubt" - mit eins gekennzeichnet - wiedergegeben werden. Selbstverständlich ist eine andersartige Nomenklatur ebenso denkbar.

Vorzugsweise erfasst das Erfassungsmittel die Sensordaten für ein definiertes Zeitfenster. Vorteilhaft beträgt das Zeitfenster zwischen 0,5 Sekunden und zehn Sekunden, insbesondere zwischen einer Sekunde und fünf Sekunden.

Vorzugsweise ermittelt die Verarbeitungseinheit mittels eines in der Verarbeitungseinheit hinterlegten Ensembles von mindestens zehn Entscheidungsbäumen aus den Sensordaten den bestimmten Spindelzustand. Vorteilhaft ist in der Verarbeitungseinheit ein Ensemble von regularisierten Entscheidungsbäumen hinterlegt. In einer bevorzugten Ausführungsform der Erfindung erfolgt dies, indem die Verarbeitungseinheit mittels der künstlichen Intelligenz mindestens ein definiertes Merkmal der Sensordaten auf Basis des definierten Zeitfensters und auf Basis der erfassten Sensordaten errechnet.

Vorzugsweise werden mehrere definierte Merkmale für jedes Signal, das von einem Sensor erfasst wird, für ein vorzugsweise werkseitiges oder auch von einem Kunden vorgegebenes und später nicht mehr veränderliches Zeitfenster errechnet.

Die definierten Merkmale sind beispielsweise ein Mittelwert der Sensordaten und/oder Koeffizienten einer kontinuierlichen Wavelet-Transformation beispielsweise zusammen mit statistischen Merkmalen wie z. B. statistischen Momenten und/oder einer absoluten Summe von Änderungen innerhalb eines Zeitfensters. Dies führt zu einer guten Zeit-Frequenz-Darstellung der Signale. Mittels der künstlichen Intelligenz und des bereits erwähnten Ensembles von regularisierten Entscheidungsbäumen ermittelt die Verarbeitungseinheit auf Basis der definierten Merkmale den bestimmten Spindelzustand. Da der bestimmte Spindelzustand erfindungsgemäß die Belastung der Spindel charakterisiert, kann mittels der Verarbeitungseinheit die Belastung der Spindel kategorisiert werden.

Vorteilhaft wird zur Bestimmung des Spindelzustands die künstliche Intelligenz, insbesondere in Form eines Moduls für künstliche Intelligenz, auf Basis gekennzeichneter Sensordaten trainiert. Die Sensordaten können durch eine Zusammenstellung gesteuerter Experimente mit bekannten Belastungen der Spindel gewonnen werden. Auf diese Weise kann ein großer Umfang von typischen Betriebsarten, Betriebsmodi und Werkzeugen abgedeckt werden.

Während eines derartigen Trainings kann auch Gradient Boosting angewendet werden, um Parameter, welche die künstliche Intelligenz zur Abschätzung des Spindelzustands verwendet, anzupassen.

Die bekannte Belastung der Spindel wird zu Trainingszwecken vorteilhaft auf Basis eines kundenspezifischen mechanistischen Modells einer Spindel bestimmt. Durch dieses Training lernt die künstliche Intelligenz, die Belastung der Spindel auf Basis der erfassten Sensordaten in verschiedenen Betriebsmodi vorherzusagen.

Als Alternative zum mechanistischen Modell kann zu Trainingszwecken auch Domain Expertise angewendet werden. Hierbei labelt bzw. markiert ein Experte die Sensordaten per Hand. Ein Experte weiß aus Erfahrung, wann die Belastung der Spindel ein Maximum erreicht, sodass ein derartiges Labeln möglich ist.

In einer vorteilhaften Ausführungsform der Erfindung erfolgt die Analyse der erfassten Sensordaten mittels künstlicher Intelligenz mittels eines Convolutional Neural Network- auch als CNN bezeichnet. Vorzugsweise werden hierfür Sensordaten innerhalb eines Zeitfensters ausgewertet.

Das CNN verwendet als Eingabewerte unverarbeitete Signale - auch Rohsignale genannt - nach einer trivialen Normalisierung - beispielsweise mittels Min-Max-Scaling oder Z-Score-Standardisierung. Auf diese Weise normalisierte Daten werden durch ein Netzwerk gewichteter nichtlinearer oder linearer Funktionen geschleust. Somit erlangte Werte werden mittels des Ausgabemittels ausgegeben und zeigen die derzeitige Belastung der Spindel an.

Vorzugsweise wird zudem ein Convolutional Layer verwendet, der eine Reihe lokaler Filter umfasst. Hierbei werden automatisch aussagekräftige Merkmale aus den Signalen extrahiert.

Ein Fully-connected Layer verbindet Flattened Filters mit einer gewissen Anzahl an Ausgabeknoten. Vorzugsweise entspricht die Anzahl der Knoten den Kategorien der Belastung der Spindel. Jeder Knoten entspricht vorzugsweise einer der bereits erwähnten Kategorien "permanent erlaubt", "mittelfristig erlaubt", "kurzfristig erlaubt" und "nicht erlaubt". Ein finales Belastungslevel wird identifiziert, indem der Knoten gewählt wird, der mit dem größten Wert assoziiert wird.

Gewichtungen der linearen und nichtlinearen Funktionen des CNN werden durch fortlaufende Beispiele der Sensordaten mit einem bekannten Belastungstyp trainiert. Generierte Ausgabewerte werden mit einer Ground Truth verglichen.

Vorteilhaft ist das Ausgabemittel derart ausgebildet, den bestimmten Spindelzustand an ein Visualisierungsmittel zu übergeben. Das Visualisierungsmittel kann eine bereits bestehende Komponente (z. B. HMI) der Werkzeugmaschine sein oder als separates Visualisierungsmittel ausgeführt sein.

Als Visualisierungsmittel eignet sich besonders gut ein Display. Dieses Display kann Teil eines HMI-Systems sein. HMI steht hierbei für Human-Machine Interface. Ein HMI-System stellt eine Benutzerschnittstelle dar, durch welche ein Mensch mit einer Maschine in Kontakt treten kann.

Vorteilhaft wird das Belastungslevel der Spindel während des definierten Zeitfensters vom Ausgabemittel an das Visualisierungsmittel übergeben. Das Visualisierungsmittel kann das Belastungslevel beispielsweise in Form einer Ampel darstellen, die beispielsweise die bereits erläuterten vier Kategorien umfasst.

Zudem ist auch eine Darstellung mit einer Punktzahl oder einem kontinuierlichen Verlauf, vorzugsweise zwischen zwei Punktzahlen, oder eine andersartige Darstellung möglich.

Eine Generalisierungsfähigkeit der künstlichen Intelligenz hängt von einer Anzahl und Variation der Betriebsmodi, mit denen es trainiert wurde, ab. Ein Datensatz wird zu Trainingszwecken vorteilhaft in einen Trainingsdatensatz und einen Validierungsdatensatz geteilt. Die künstliche Intelligenz wird anhand des Trainingsdatensatzes optimiert. Anhand des Validierungsdatensatzes, der nicht während des Trainings verwendet wird, werden die künstliche Intelligenz sowie die erfindungsgemäße Vorrichtung getestet. Nach Beendigung des Trainings, wenn also ein Fehler auf ein Minimum reduziert wurde, werden alle Parameter gespeichert. Die Vorrichtung kann nun mit neuen Daten verwendet werden.

Die erfindungsgemäße Vorrichtung eignet sich besonders gut für eine Werkzeugmaschine mit einer Spindel. Die Werkzeugmaschine weist zudem vorteilhaft mindestens einen Sensor, welcher dem Erfassen von Spindeldaten dient, auf. Der Sensor ist vorteilhaft mit dem Erfassungsmittel der erfindungsgemäßen Vorrichtung verbunden. Zur Anzeige von Ausgabewerten eignet sich zudem ein Visualisierungsmittel, das Teil der Werkzeugmaschine ist oder als externes Gerät an die Werkzeugmaschine angebunden ist. Durch dieses ist der bestimmte Spindelzustand ausgebbar.

Die Erfindung betrifft zudem ein Verfahren zum Bestimmen eines Spindelzustands mit der bereits erläuterten Vorrichtung. Hierbei werden die Sensordaten der Spindel vom Erfassungsmittel erfasst, die erfassten Sensordaten von der Verarbeitungseinheit mittels künstlicher Intelligenz analysiert, der Spindelzustand auf Basis der Analyse der erfassten Sensordaten bestimmt und der bestimmte Spindelzustand vom Ausgabemittel ausgegeben.

In einer vorteilhaften Ausführungsform der Erfindung wird die Belastung der Spindel von der Verarbeitungseinheit kategorisiert.

In einer vorteilhaften Ausführungsform der Erfindung werden die Sensordaten vom Erfassungsmittel für ein definiertes Zeitfenster erfasst.

In einer vorteilhaften Ausführungsform der Erfindung wird der bestimmte Spindelzustand von der Verarbeitungseinheit mittels des in der Verarbeitungseinheit hinterlegten Ensembles von mindestens zehn Entscheidungsbäumen aus den Sensordaten ermittelt.

In einer vorteilhaften Ausführungsform der Erfindung wird mindestens ein definiertes Merkmal der Sensordaten mittels des definierten Zeitfensters errechnet. Vorzugsweise werden mehrere definierte Merkmale errechnet.

In einer vorteilhaften Ausführungsform der Erfindung wird der bestimmte Spindelzustand von der Verarbeitungseinheit mittels des Ensembles von mindestens zehn Entscheidungsbäumen aus dem definierten Merkmal ermittelt. Vorzugsweise wird der bestimmte Spindelzustand von der Verarbeitungseinheit mittels des Ensembles von mindestens zehn Entscheidungsbäumen aus mehreren definierten Merkmalen der Sensordaten ermittelt.

In einer vorteilhaften Ausführungsform der Erfindung werden die erfassten Sensordaten mittels der künstlichen Intelligenz mittels des Convolutional Neural Network analysiert.

In einer vorteilhaften Ausführungsform der Erfindung wird der bestimmte Spindelzustand vom Ausgabemittel an ein Visualisierungsmittel übergeben.

Ein mit der Erfindung erzielter Vorteil besteht darin, dass eine quantitative Berechnung und Anzeige der aktuellen Belastung der Spindel, vorzugsweise in nahezu Echtzeit, ermöglicht wird. Da eine Verarbeitung in der Verarbeitungseinheit datengetrieben ist, kann die Verarbeitung mittels zusätzlicher Daten (z. B. Sensordaten und/oder Parameterdaten der Spindel) verbessert werden.

Die Vorrichtung benutzt künstliche Intelligenz, um eine datengetriebene nahe an einer Echtzeit-Abschätzung liegende derzeitige Belastung, der eine Spindel während des Betriebs ausgesetzt ist, zu erhalten.

Im Folgenden wird die Erfindung anhand der in den Figuren beschriebenen Ausführungsbeispiele näher erläutert. Es zeigen:
- FIG 1: eine Ausgestaltung eines Systems umfassend eine Spindel, eine Vorrichtung sowie ein Visualisierungsmittel und
- FIG 2: einen Ablauf des Verfahrens.

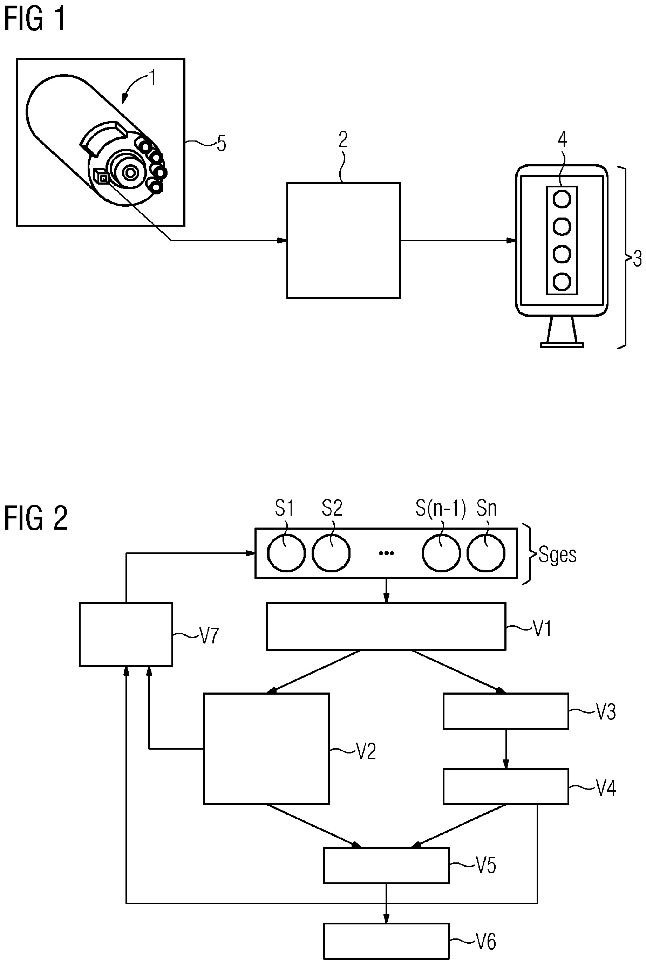

Figur 1 zeigt eine Ausgestaltung eines Systems umfassend eine Spindel 1 einer Werkzeugmaschine 5, eine Vorrichtung 2 sowie ein Visualisierungsmittel 3. Sensordaten der Spindel 1 werden vom Erfassungsmittel der Vorrichtung 2 erfasst und in der Verarbeitungseinrichtung der Vorrichtung 2 mittels künstlicher Intelligenz analysiert. Aus der Analyse bestimmt die Verarbeitungseinrichtung den Spindelzustand. Das Ausgabemittel der Vorrichtung 2 übergibt den bestimmten Spindelzustand an ein Visualisierungsmittel 3. Das Visualisierungsmittel 3 ist als Display ausgeführt. Die Ampel 4 auf dem Visualisierungsmittel 3 ermöglicht eine Anzeige der vier Kategorien "permanent erlaubt", "mittelfristig erlaubt", "kurzfristig erlaubt" und "nicht erlaubt".

Figur 2 zeigt einen Ablauf des Verfahrens. Zuerst werden Signale Sges von Sensoren erfasst. Als Beispiele können hierfür die Temperatur der Spindel S1, das Drehmoment der Spindel S2, die Kraft der Spindel S(n-1) und die Rotationsgeschwindigkeit der Spindel Sn erfasst werden. Jedoch ist auch eine größere Anzahl von Signalen möglich.

Ein Verfahrensschritt V1 betrifft das bereits erwähnte Zeitfenster. Kontinuierliche Sensordaten werden mittels Zeitfenster einer bestimmten Länge - vorzugsweise zwischen 0,5 Sekunden und 10 Sekunden - unterteilt.

In einem Verfahrensschritt V2 werden die erfassten Sensordaten als Rohsignale in ein CNN, das in der eine künstliche Intelligenz umfassenden Verarbeitungseinheit hinterlegt ist, eingebracht.

Alternativ werden in einem Verfahrensschritt V3 in der Verarbeitungseinheit mittels künstlicher Intelligenz mehrere definierte Merkmale für jedes Signal, das von einem Sensor erfasst wird, für ein vorzugsweise werkseitiges oder auch von einem Kunden vorgegebenes und später nicht mehr veränderliches Zeitfenster errechnet und diese in einem Verfahrensschritt V4 an ein Ensemble von regularisierten Entscheidungsbäumen bzw. Boosted Classification Trees übergeben.

In einem Verfahrensschritt V5 wird das Belastungslevel der Spindel vorzugsweise mittels des in der erfindungsgemäßen Vorrichtung verfügbaren Ausgabemittels ausgegeben.

In einem Verfahrensschritt V6 wird die Belastung der Spindel, vorzugsweise kategorisiert, mittels eines Displays visualisiert.

Ein Verfahrensschritt V7 zeigt das bereits erläuterte Training der künstlichen Intelligenz mittels aufgenommenen Sensordaten und bekannter Belastung der Spindel.

Das Verfahren zeigt, dass in der Vorrichtung ein Weg implementiert ist, der auf einer merkmalbasierten Annäherung beruht, sowie ein Weg, der sich auf neuronale Netze stützt. Der Weg über das CNN basiert hauptsächlich auf Rohsignalen und kann auf leichte Weise erweitert oder verbessert werden, indem neue Daten eingefügt werden.

## Patentansprüche

1. Vorrichtung (2), zum Bestimmen eines Spindelzustands einer Spindel (1) einer Werkzeugmaschine (5), mit
einem Erfassungsmittel, welches einem Erfassen von Sensordaten der Spindel (1) dient,
einer Verarbeitungseinheit, welche derart ausgebildet ist, dass sie die erfassten Sensordaten mittels künstlicher Intelligenz analysiert und hieraus einen Spindelzustand bestimmt, und
einem Ausgabemittel zum Ausgeben des bestimmten Spindelzustands.

2. Vorrichtung (2) nach Anspruch 1, wobei der bestimmte Spindelzustand eine Belastung der Spindel (1) charakterisiert.

3. Vorrichtung (2) nach Anspruch 2, wobei die Verarbeitungseinheit derart ausgebildet ist, die Belastung der Spindel (1) zu kategorisieren.

4. Vorrichtung (2) nach einem der Ansprüche 1 bis 3, wobei das Erfassungsmittel derart ausgebildet ist, die Sensordaten für ein definiertes Zeitfenster zu erfassen.

5. Vorrichtung (2) nach einem der Ansprüche 1 bis 4, wobei die Verarbeitungseinheit derart ausgebildet ist, mittels eines in der Verarbeitungseinheit hinterlegten Ensembles von mindestens zehn Entscheidungsbäumen aus den Sensordaten den bestimmten Spindelzustand zu ermitteln.

6. Vorrichtung (2) nach einem der Ansprüche 1 bis 5, wobei die Verarbeitungseinheit derart ausgebildet ist, mindestens ein definiertes Merkmal der Sensordaten mittels des definierten Zeitfensters zu errechnen.

7. Vorrichtung (2) nach einem der Ansprüche 1 bis 6, wobei die Verarbeitungseinheit derart ausgebildet ist, mittels des Ensembles von mindestens zehn Entscheidungsbäumen aus dem definierten Merkmal der Sensordaten den bestimmten Spindelzustand zu ermitteln.

8. Vorrichtung (2) nach einem der Ansprüche 1 bis 7, wobei die Analyse der erfassten Sensordaten mittels künstlicher Intelligenz mittels eines Convolutional Neural Network erfolgt.

9. Vorrichtung (2) nach einem der Ansprüche 1 bis 8, wobei das Ausgabemittel derart ausgebildet ist, den bestimmten Spindelzustand an ein Visualisierungsmittel (3) zu übergeben.

10. Werkzeugmaschine (5) mit einer Spindel, mindestens einem Sensor, welcher dem Erfassen von Spindeldaten dient, und einer Vorrichtung (2) nach einem der Ansprüche 1 bis 9, wobei der Sensor mit dem Erfassungsmittel verbunden ist.

11. Werkzeugmaschine (5) nach Anspruch 10, wobei die Werkzeugmaschine ein Visualisierungsmittel (3) aufweist, mittels dem der bestimmte Spindelzustand ausgebbar ist, wobei das Ausgabemittel mit dem Visualisierungsmittel (3) verbunden ist.

12. Verfahren zum Bestimmen eines Spindelzustands mit einer Vorrichtung (2) nach einem der Ansprüche 1 bis 9 mit folgenden Schritten:
- Erfassen der Sensordaten der Spindel (1) von dem Erfassungsmittel,
- Analysieren der erfassten Sensordaten von der Verarbeitungseinheit mittels künstlicher Intelligenz,
- Bestimmen eines Spindelzustands auf Basis der Analyse der erfassten Sensordaten,
- Ausgeben des bestimmten Spindelzustands von dem Ausgabemittel.

13. Verfahren nach Anspruch 12, wobei die Belastung der Spindel (1) von der Verarbeitungseinheit kategorisiert wird.

14. Verfahren nach einem der Ansprüche 12 oder 13, wobei die Sensordaten vom Erfassungsmittel für ein definiertes Zeitfenster erfasst werden.

15. Verfahren nach einem der Ansprüche 12 bis 14, wobei der bestimmte Spindelzustand von der Verarbeitungseinheit mittels des in der Verarbeitungseinheit hinterlegten Ensembles von mindestens zehn Entscheidungsbäumen aus den Sensordaten ermittelt wird.
